# EUROPÄISCHE PATENTANMELDUNG

(11) **EP 0 936 448 A1**
(43) Veröffentlichungstag der Anmeldung: **18.08.1999**
(21) Anmeldenummer: 99102281.5
(22) Anmeldetag: 05.02.1999
(51) Int. Cl.: G01D 15/16

(54) **Tintenleitdocht und Druckeinrichtung**

(30) Priorität: 17.02.1998 DE 19806525
(71) Anmelder: Dia-Nielsen GmbH & Co. KG, Zubehör für die Messtechnik, 52355 Düren (DE)
(72) Erfinder: Gehrer, Udo, 52146 Würselen (DE)
(74) Vertreter: Castell, Klaus, Dr.

(57) **Zusammenfassung**

Tintenleitdocht (1), der erfindungsgemäß wenigstens eine gelenkige Stelle (3), die vorzugsweise elastisch ausgebildet ist, aufweist.
Die gelenkige Stelle (3) kann z. B. als wenigstens ein Einschnitt in den Tintenleitdocht (1) ausgebildet sein.
Ferner kann der Tintenleitdocht (1) zumindest teilweise von Mitteln zum Umformen umgeben sein.

Druckeinrichtung, insbesondere für ein schreibendes Meßgerät, die wenigstens einen Tintenspeicher, wenigstens eine Schreibspitze und Mittel zum Versorgen der Schreibspitze mit Tinte aus dem Tintenspeicher aufweist, wobei erfindungsgemäß die Mittel zum Versorgen der Schreibspitze (2) mit Tinte aus dem Tintenspeicher (7) als wenigstens ein Tintenleitdocht (1) ausgebildet sind.

## Beschreibung

Die Erfindung betrifft einen Tintenleitdocht sowie eine Druckeinrichtung, insbesondere für ein schreibendes Meßgerät, die wenigstens einen Tintenspeicher, wenigstens eine Schreibspitze und Mittel zum Versorgen der Schreibspitze mit Tinte aus dem Tintenspeicher aufweist.

Unter dem Begriff "Tintenleitdocht" seien im folgenden Tintenleitdochte mit und ohne aufgesetzte Schreibspitzen zu verstehen.

Die mechanischen Druckeinrichtungen für schreibende Meßgeräte weisen im Regelfall Tintenversorgungssysteme auf, bei denen die Tinte in einem Schwamm oder in einem filzartigen Medium gespeichert wird. Die so gespeicherte Tinte wird nun kontinuierlich oder diskontinuierlich aus dem Speicher zu einer oder mehreren Schreibspitzen geführt und gelangt über diese auf das gewählte Aufzeichnungsmedium.

Wenn die Schreibspitze selbst nur kurzzeitig mit dem Aufzeichnungsmedium in Kontakt gebracht wird und in dieser Zeit die Tintenversorgung unterbrochen wird, um die Beweglichkeit der Spitze zu gewährleisten, entsteht eine diskontinuierliche Zuführung bzw. Versorgung der Schreibspitze mit Tinte aus dem Tintenspeicher.

Andere Tintenversorgungssysteme der bekannten mechanischen Druckeinrichtungen bestehen oftmals aus vergleichsweise aufwendigen Konstruktionen, bei denen die der Schreibspitze zuzuführende Tinte mittels mehrerer in Reihe geschalteter Komponenten - wie Schläuche, Dochte, Schreibspitzen, etc. - von dem Tintenspeicher zu dem Medium (z. B. Papier) geleitet werden. Zudem werden Komponenten - wie Hebel auf Achsen, linear geführte Elemente, etc. - benötigt, die der Beweglichkeit der Schreibspitze bzw. der mit ihr verbundenen Bauteile dienen und dadurch erst ein Aufzeichnen der mittels der Meßgeräte erfaßten Signale bzw. Meßwerte ermöglichen. Die Montage der erwähnten Komponenten ist jedoch kostenintensiv.

Einige der bekannten Tintenversorgungssysteme weisen zudem den Nachteil auf, daß die Beweglichkeit nur dann gewährleistet werden kann, wenn sich die Schreibspitze nicht in kontinuierlichem Kontakt mit dem Tintenspeicher befindet. Dieser Nachteil ist jedoch bei den oftmals erwünschten hohen Auftragungsgeschwindigkeiten nicht tolerierbar.

Aufgabe der vorliegenden Erfindung ist es, eine kostengünstige Vorrichtung anzugeben, die eine kontinuierliche Versorgung einer Schreibspitze mit Tinte, vorzugsweise aus einem Tintenspeicher, ermöglicht. Ferner liegt der Erfindung die Aufgabe zugrunde, eine Druckeinrichtung der gattungsgemäßen Art anzugeben, bei der ein Großteil der erwähnten Komponenten der bekannten Druckeinrichtungen bzw. Tintenversorgungssysteme nicht mehr erforderlich ist.

Zur Lösung dieser Aufgabe wird ein Tintenleitdocht vorgeschlagen, der erfindungsgemäß wenigstens eine gelenkige Stelle, die vorzugsweise elastisch ausgebildet ist, aufweist.

Die erfindungsgemäße Druckeinrichtung ist dadurch gekennzeichnet, daß die Mittel zum Versorgen der Schreibspitze mit Tinte aus dem Tintenspeicher als wenigstens ein Tintenleitdocht ausgebildet sind.

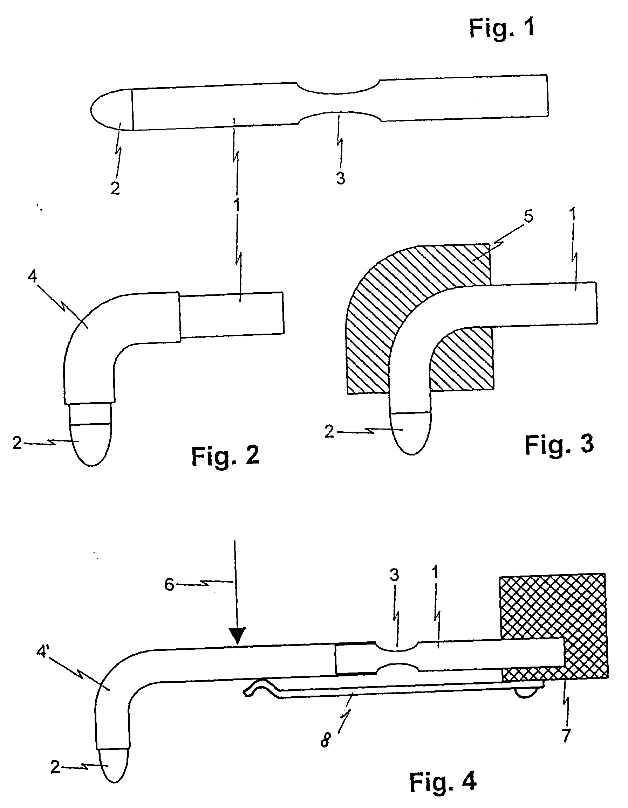

Der erfindungsgemäße Tintenleitdocht, die erfindungsgemäße Druckeinrichtung sowie weitere Ausgestaltungen des- bzw. derselben seien nachfolgend anhand der Figuren 1 bis 4 näher erläutert.

**Figur 1** zeigt den erfindungsgemäßen Tintenleitdocht 1, an dessen einem Ende eine Schreibspitze 2 vorgesehen ist. Entsprechend der Erfindung weist der Tintenleitdocht 1 eine gelenkige Stelle 3 auf. Diese gelenkige Stelle 3 kann gemäß einer vorteilhaften Ausgestaltung des erfindungsgemäßen Tintenleitdochtes 1 dadurch realisiert werden, daß wenigstens ein Einschnitt 3 in den Tintenleitdocht 1 vorgenommen wird. Abhängig davon, wie beweglich der Tintenleitdocht 1 ausgebildet sein soll, sind u. U. mehrere Einschnitte an einem oder mehreren Abschnitten des Tintenleitdochtes 1 vorzusehen.

Aufgrund der so erzielten, im Prinzip beliebig großen Beweglichkeit des Tintenleitdochtes 1 kann dieser die bisher verwendeten Komponenten der bekannten mechanischen Druckeinrichtungen ersetzen. Das Versorgen der Schreibspitze 2 mit Tinte aus einem Tintenspeicher 7 - wie er in der Figur 4 dargestellt ist - kann daher ausschließlich über den erfindungsgemäßen Tintenleitdocht 1 erfolgen. Durch den Einsatz des erfindungsgemäßen Tintenleitdochtes 1 werden die bisher verwendeten Achsen oder andersartigen externen Gelenkvorrichtungen überflüssig.

Zudem ist neben der beliebig großen Beweglichkeit des erfindungsgemäßen Tintenleitdochtes 1 eine kontinuierliche Verbindung zwischen Schreibspitze 2 und Tintenspeicher 7 gegeben. So kann auch im Falle hoher Auftragungsgeschwindigkeiten eine kontinuierliche Tintenversorgung gewährleistet werden. Der erfindungsgemäße Tintenleitdocht 1 läßt sich vergleichsweise wenig zeit- und kostenintensiv montieren.

Den erfindungsgemäßen Tintenleitdocht 1 weiterbildend wird vorgeschlagen, daß er zumindest teilweise von Mitteln Zum Umformen umgeben ist. Diese Mittel zum Umformen können - wie in der **Figur 2** dargestellt - z. B. als wenigstens ein den Tintenleitdocht 1 ummantelndes Rohr 4 ausgebildet sein. Auf diese Weise läßt sich ein gewünschter Winkel zwischen der Schreibspitze 2 und dem Aufzeichnungsmedium einstellen.

Ein weiteres mögliches Mittel zum Umformen ist in der **Figur 3** gezeigt. Hierbei ist der erfindungsgemäße Tintenleitdocht 1 von einer Fixiervorrichtung 5 umgeben, mittels derer ebenfalls der Winkel zwischen der Schreibspitze 2 und dem Aufzeichnungsmedium einstellbar ist.

**Figur 4** zeigt schematisch die erfindungsgemäße Druckeinrichtung, wie sie insbesondere für schreibende Meßgeräte verwendet wird. Eine derartige Druckeinrichtung weist wenigstens einen Tintenspeicher 7, wenigstens eine Schreibspitze 2 und Mittel zum Versorgen der Schreibspitze 2 mit Tinte aus dem Tintenspeicher 7 auf. Der Tintenspeicher 7, der in der Figur 4 als Black-Box dargestellt ist, kann - wie eingangs bereits erwähnt wurde - als Schwamm, als ein filzartiges Medium oder als ein Tinte-aufnehmender Behälter ausgebildet sein.

Sieht die Druckeinrichtung mehrere Schreibspitzen 2 vor, so werden diese in der Regel separat aus dem Tintenspeicher 7 mit Tinte versorgt.

Erfindungsgemäß erfolgt die Versorgung der Schreibspitze 2 mit Tinte aus dem Tintenspeicher 7 mittels des Tintenleitdochtes 1. Dazu steht eines der Enden des erfindungsgemäßen Tintenleitdochtes 1 mit dem Tintenspeicher 7 in Wirkverbindung, so daß die Tinte über den Tintenleitdocht 1 zu der Schreibspitze 2 gelangen kann. Der Tintenleitdocht 1 erlaubt aufgrund seiner gelenkigen Stelle 3 - abhängig davon, wie diese ausgebildet ist - ein Auslenken aus der in der Figur 4 dargestellten Position in eine Vielzahl von gewünschten Positionen.

Die erfindungsgemäße Druckeinrichtung weist entsprechend einer vorteilhaften Ausgestaltung Mittel zum Verändern der Lage des Tintenleitdochtes 1 auf.

Wirkt z. B., wie durch den Pfeil 6 angedeutet, eine Kraft auf den vorderen, der Schreibspitze 2 zugewandten Bereiches des Tintenleitdochtes 1, so wird dieser Bereich des Tintenleitdochtes 1 nach unten ausgelenkt und auf ein entsprechend angeordnetes Aufzeichnungsmedium gedrückt. Im Regelfall wird die gelenkige Stelle 3 des Tintenleitdochtes 1 elastisch ausgebildet sein, so daß sich der ausgelenkte Tintenleitdocht 1 nach Beendigung der Krafteinwirkung wieder in seine Ausgangsposition zurückbewegt. Ist die gelenkige Stelle 3 des Tintenleitdochtes 1 nicht elastisch ausgebildet, so kann der Tintenleitdochtes 1 z. B. zwangsgeführt sein oder durch eine separte Feder 8 in die Ausgangslage zurückgestellt werden.

## Patentansprüche

1. Tintenleitdocht, ***dadurch gekennzeichnet, daß*** der Tintenleitdocht (1) wenigstens eine gelenkige Stelle (3) aufweist.

2. Tintenleitdocht nach Anspruch 1, ***dadurch gekennzeichnet, daß*** die gelenkige Stelle (3) elastisch ausgebildet ist.

3. Tintenleitdocht nach Anspruch 1 oder 2, ***dadurch gekennzeichnet, daß*** die gelenkige Stelle (3) als wenigstens ein Einschnitt in den Tintenleitdocht (1) ausgebildet ist.

4. Tintenleitdocht nach einem der vorhergehenden Ansprüche, ***dadurch gekennzeichnet, daß*** er zumindest teilweise von Mitteln zum Umformen umgeben ist.

5. Tintenleitdocht nach Anspruch 4, ***dadurch gekennzeichnet, daß*** die Mittel zum Umformen als wenigstens ein den Tintenleitdocht (1) ummantelndes Rohr (4) ausgebildet sind.

6. Druckeinrichtung, insbesondere für ein schreibendes Meßgerät, die wenigstens einen Tintenspeicher, wenigstens eine Schreibspitze und Mittel zum Versorgen der Schreibspitze mit Tinte aus dem Tintenspeicher aufweist, ***dadurch gekennzeichnet, daß*** die Mittel zum Versorgen der Schreibspitze (2) mit Tinte aus dem Tintenspeicher (7) als wenigstens ein Tintenleitdocht (1) ausgebildet sind.

7. Druckeinrichtung nach Anspruch 6, ***dadurch gekennzeichnet, daß*** sie Mittel zum Verändern der Lage des Tintenleitdochtes (1) aufweist.

8. Druckeinrichtung nach einem der vorhergehenden Ansprüche, ***gekennzeichnet durch*** eine Feder (8), die den Tintenleitdocht (1) in eine Null-Lage zurückführt.
